# EUROPÄISCHE PATENTSCHRIFT

(11) **EP 2 924 973 B1**
(45) Veröffentlichungstag und Bekanntmachung des Hinweises auf die Patenterteilung: **12.04.2017**
(21) Anmeldenummer: 15155872.3
(22) Anmeldetag: 20.02.2015
(51) Int. Cl.: H04N 5/225, G02B 3/12, H04N 17/00

(54) **OPTOELEKTRONISCHE VORRICHTUNG UND VERFAHREN ZUM JUSTIEREN**
OPTO-ELECTRONIC DEVICE AND METHOD FOR ITS ADJUSTMENT
DISPOSITIF OPTOÉLECTRONIQUE ET SON PROCÉDÉ DE RÉGLAGE

(30) Priorität: 24.03.2014 DE 102014104028
(43) Veröffentlichungstag der Anmeldung: 30.09.2015
(73) Patentinhaber: SICK AG, 79183 Waldkirch (DE)
(72) Erfinder: Strohmeier, Dr. Dirk, 79104 Freiburg (DE); Schneider, Dr. Florian, 79276 Reute (DE); Bertz, Denise, 79194 Gundelfingen (DE)
(74) Vertreter: Hehl, Ulrich

(56) Entgegenhaltungen:
- DE-A1-102005 021 735
- DE-A1-102012 104 579
- JP-A- 2004 342 228
- US-A1- 2004 227 838
- US-A1- 2012 113 318
- US-A1- 2012 307 089

## Beschreibung

Die Erfindung betrifft eine optoelektronische Vorrichtung und ein Verfahren zum Justieren mit einer adaptiven Linse nach dem Oberbegriff von Anspruch 1 beziehungsweise 3.

Für eine reibungslose Funktion muss in optischen Systemen mit hohen Qualitätsanforderungen eine verlässliche Justierung gewährleistet werden. Das betrifft zum einen die Fertigung, wo während oder nach dem Zusammenbau die optischen Komponenten, wie Lichtquellen, Linsen, Filter oder Bildsensoren, zueinander ausgerichtet werden, um Toleranzen oder Chargenschwankungen auszugleichen. Die mechanische Justage erfordert zusätzliche Freiheitsgrade im Design, um überhaupt Verstellmöglichkeiten für die Ausrichtung zu bieten, und außerdem Betriebsmittel beziehungsweise Personalaufwand für die manuelle, halb- oder vollautomatische Durchführung der Justage. Dadurch werden die Herstellkosten erheblich erhöht.

Die Justierung spielt zum anderen auch im Feld eine wichtige Rolle. Hier geht es darum, das optische System unter Ausgleich von Versatz- und Verkippungstoleranzen zwischen den Befestigungspunkten des Geräts und einem gewünschten Beleuchtungsbeziehungsweise Sichtbereich auszurichten. Wird ein Austausch eines optischen Systems erforderlich, muss dieser Vorgang wiederholt werden. Beim parallelen Einsatz mehrerer optischer Systeme, etwa in einer Multihead-Kamera mit mehreren Kameramodulen, ist für die gegenseitige Ausrichtung zu sorgen.

Alternativ zu einer Ausrichtung ist bei Kamerasystemen auch denkbar, den Sichtbereich durch Bildverarbeitung zuzuschneiden, der sich dadurch jedoch verkleinert. Dies gilt entsprechend für die Parallelisierung mehrerer Kameramodule, wo ein Toleranzbereich als zusätzliche Überlappungsfläche vorgehalten werden kann, um ein lückenloses, aber wegen der zusätzlichen Überlappung verkleinertes Gesamtgesichtsfeld zu erhalten.

In optischen Systemen ist häufig eine Optik vorgesehen, die mit Hilfe einer Fokusverstellung auf einen bestimmten Abstand oder Abstandsbereich scharf eingestellt wird, indem elektromechanisch oder optomechanisch die Position der Linsen und damit die Schnittweite der Sende- oder Empfangsoptik verstellt wird. Solche Lösungen erfordern viel Bauraum und stellen zudem hohe Ansprüche an den mechanischen Aufbau zur präzisen Einstellbarkeit, damit eine vorgegebene Fokuslage auch tatsächlich angenommen wird. Eine Alternative ist der Einsatz von Optiken, bei denen nicht die Schnittweite, sondern unmittelbar die Form und damit die Brennweite der Linse selbst mittels einer Spannungsansteuerung variiert wird. Insbesondere werden dafür Gel- oder Flüssiglinsen genutzt. Bei einer Gellinse wird eine silikonartige Flüssigkeit mittels piezoelektrischer oder induktiver Aktoren mechanisch deformiert. Flüssiglinsen nutzen beispielsweise den sogenannten Elektrobenetzungseffekt (electrowetting) aus, indem zwei nicht mischbare Flüssigkeiten in einer Kammer übereinander angeordnet werden. Bei Anlegen einer Steuerspannung ändern die beiden Flüssigkeiten ihre Oberflächenspannung in unterschiedlicher Weise, so dass die innere Grenzfläche der Flüssigkeiten spannungsabhängig ihre Krümmung verändert. Ein optoelektronischer Sensor mit Fokusverstellung auf Basis von Flüssiglinsen ist aus der DE 10 2005 015 500 A1 oder der DE 20 2006 017 268 U1 bekannt. Die Fokusverstellung ermöglicht eine Anpassung an die Szenerie, ersetzt aber keine Justierung.

In Weiterbildung von Flüssiglinsen zur Fokusverstellung schlägt die EP 2 071 367 A1 vor, auch die Verkippung der Flüssiglinse durch Anlegen unterschiedlicher Spannungen in Umlaufrichtung zu verändern. Um die Aufnahme verwackelter Bilder zu verhindern, wird dann die Eigenbewegung der Kamera ermittelt, und eine oder mehrere Linsen in der Kamera werden verkippt, um dieser Eigenbewegung entgegenzuwirken. Diese Bewegungskompensation basiert ebenfalls auf einer zuvor erfolgten Ausrichtung der Kamera in sich. Eine Ausrichtung bezüglich der Szenerie ist für eine handgehaltene Kamera ohnehin nicht festgeschrieben.

In der DE 10 2005 015 500 A1 wird ein weiterer optoelektronischer Sensor mit einer Flüssiglinse offenbart, die durch einen asymmetrischen Rahmen oder unterschiedliche elektrische Potentiale an separaten Elektroden des Linsenrahmens in ihren Strahlformungseigenschaften asymmetrisch veränderbar ist. Das Dokument erläutert dann aber nicht, wozu das genutzt werden kann.

Die JP 2004 342 228 A offenbart einen Lesekopf für optische Medien, in dessen optischem Pfad eine Flüssiglinse mit einer Vielzahl von Elektroden zu deren Ansteuerung angeordnet ist. Diese Einstellungen werden u.a. für eine Korrektur von Herstellungsfehlern der Substratdicke des Mediums durch Verschiebung und Verkippung der Linse verwendet.

US 2012/0307089A1 befasst sich mit der Schätzung optischer Kenndaten mittels eines sogenannten Schärfedurchlaufs. Eine dabei gewonnene Information ist die Verkippung der Linse, die durch Eigenbewegung entsteht und die durch aktives Verkippen der Linse in die Gegenrichtung kompensiert werden kann.

Aus der US 2004/0227838 A1 ist ein Bildsensor mit einem variablen optischen Element bekannt, das eine Verschiebung und Verkippung der optischen Achse kompensieren kann.

In der US 2012/0113318 A1 wird eine justagefreie Herstellung von Kameramodulen offenbart. Zur Einstellung der optischen Eigenschaften ist in den Kameramodulen eine veränderbare Flüssigkristalllinse vorgesehen.

Es ist daher Aufgabe der Erfindung, die Justierung einer optoelektronischen Vorrichtung zu vereinfachen.

Diese Aufgabe wird durch eine optoelektronische Vorrichtung nach Anspruch 1 sowie ein Verfahren nach Anspruch 3 gelöst. Die Vorrichtung umfasst eine Optik mit einer adaptiven Linse, deren Verkippung durch elektronische Ansteuerung verändert werden kann. Die adaptive Linse ist vorzugsweise auch in ihrer Brennweite verstellbar, um eine Fokuslage einzustellen. Durch das Verkippen der adaptiven Linse können auf sehr einfache Weise Toleranzen ausgeglichen werden. Das können Fertigungstoleranzen der Bauteile selbst sein, also Chargenschwankungen von Lichtsender, Lichtempfänger oder optischen Elementen. Eine weitere Quelle sind Ungenauigkeiten beim Einbau der Bauteile in die Vorrichtung, die zu Montagetoleranzen der Bauteile zueinander und zu einem Gehäuse führen. Montagetoleranzen können aber auch die Anbringung der Vorrichtung am Ort der Anwendung betreffen. Häufig ist Ziel der Justage, dass ein Beleuchtungs- beziehungsweise Sichtfeld der Vorrichtung eine spezifizierte Geometrie und Ausrichtung aufweist, also eine gewünschte Position, Orientierung und Form in der Szenerie annimmt.

Die Erfindung hat den Vorteil, dass aufwändige mechanische Justageprozesse eliminiert werden können. Dadurch werden Kosten in Design und für die Durchführung der Justage eingespart. Dennoch wird eine sehr gute Anpassung erreicht. Die Verkippung ist eine wesentliche Einflussgröße, da Verkippungstoleranzen in der Fokusebene zu einem großen lateralen Versatz führen.

Die Justageeinheit weist bevorzugt ein Speicherelement auf, um eine im Fertigungsprozess eingelernte Kippstellung der adaptiven Linse als justierte Werkseinstellung zu speichern. Durch Einstellen der gespeicherten Kippstellung entsteht eine justierte Vorrichtung, ohne dass mechanische Justiermöglichkeiten in deren Design vorgesehen werden müssen oder ein aufwändiger Justagevorgang erforderlich ist. Alternativ zu den Werkseinstellungen ist aber auch eine anwendungsspezifische Verkippung und damit Ausrichtung denkbar.

Die Vorrichtung ist als Kamera mit einem Bildsensor als Lichtempfänger ausgebildet. Durch das Verkippen der adaptiven Linse werden Bildsensor und Empfangsoptik auf einfache Weise zueinander ausgerichtet, und es wird ein Sichtfeld der Kamera eingestellt.

Die Justageeinheit ist dafür ausgebildet, in einer Aufnahme des Bildsensors mindestens ein Bildmerkmal zu identifizieren und samt Position zu speichern. Anhand des Bildmerkmals kann die Justageeinheit eine einmal erreichte Ausrichtung überprüfen. Vornehmlich dienen aber das Bildmerkmal und dessen Position als Vorbereitung für einen späteren Gerätetausch. Die Speicherung erfolgt vorzugsweise dauerhaft, also unabhängig vom Betrieb der Vorrichtung, damit die Daten auch nach längerer Betriebspause oder bei einem Defekt verfügbar bleiben. Geeignet ist auch die Speicherung in einer übergeordneten Steuerung oder auf einem entnehmbaren Medium.

Die Justageeinheit ist außerdem dafür ausgebildet ist, mindestens ein Bildmerkmal und eine Position des Bildmerkmals einzulesen und die adaptive Linse so zu verkippen, dass sich das Bildmerkmal in einer Aufnahme des Bildsensors an der Position befindet. So wird eine zuvor erreichte Justierung anhand der Szenerie automatisch reproduziert.

Die eingelesenen Daten sind vorzugsweise diejenigen, die ein anders Gerät erzeugt und gespeichert hat. Damit wird eine Austauschbarkeit erreicht, indem das Austauschgerät anhand des mindestens einen Bildmerkmals automatisch den identischen Sichtbereich wie das ausgetauschte Gerät einstellt. Damit bleibt der gesamte physikalische Sichtbereich auszutauschender Systeme erhalten, ohne dass beispielsweise durch Beschneiden der Aufnahmen auf einen kleineren gemeinsamen Sichtbereich Informationen verlorengehen.

In einer alternativen Ausführungsform sind mindestens zwei Bildsensoren vorgesehen, denen jeweils eine Optik mit einer adaptiven Linse mit variabler Verkippung vorgeordnet ist, wobei die Sichtbereiche der Bildsensoren einen Überlappungsbereich aufweisen. Die Justageeinheit identifiziert hier mindestens ein Bildmerkmal in dem Überlappungsbereich und richtet anhand des Bildmerkmals die Sichtfelder der Bildsensoren durch Verkippen mindestens einer adaptiven Linse zueinander aus. Vorteilhafterweise befinden sich die einzelnen Sichtfelder nebeneinander und werden so ausgerichtet, dass kein lateraler Versatz auftritt. Dadurch kann der Gesamtsichtbereich maximiert werden, und dazu genügt eine sehr kleine Überlappfläche. Die Bildmerkmale oder auch andere Bildmerkmale außerhalb des Überlappbereichs können außerdem wie oben erläutert für ein Austauschgerät gespeichert werden, um das Ersetzen einzelner Kameramodule unter Erhalt der Ausrichtung zu ermöglichen.

Die adaptive Linse ist bevorzugt eine Flüssiglinse oder eine Gellinse. Solche Linsen bieten die gewünschten Einstellmöglichkeiten und sind dabei sehr bauklein und kostengünstig. Das Verkippen einer solchen Linse bedeutet natürlich nicht zwingend ein geometrisches Verkippen, sondern bezieht sich auf die optische Wirkung, die effektiv einer Verkippung entspricht.

Die adaptive Linse weist bevorzugt in Umlaufrichtung segmentierte Ansteuerelemente auf. Bei den Ansteuerelementen handelt es sich beispielsweise um segmentierte Elektroden, die eine Flüssiglinse über den Elektrobenetzungseffekt steuern. Denkbar sind weiterhin segmentierte Aktoren, insbesondere Piezoaktoren, die den Druck auf eine Flüssigkeit lokal verändern und dadurch eine Membran auf Flüssigkeit unterschiedlich krümmen, oder die direkt eine gelartige Substanz der Linse verformen. Durch die Segmentierung in Umlaufrichtung wird eine nicht rotationssymmetrische Beeinflussung der Linse ermöglicht, die zu der optischen Verkippung führt.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Durch das erfindungsgemäße Verfahren können aufwändige Justageprozesse oder der Einsatz von teuren, toleranzarmen Bauteilen verhindert werden, und es wird dennoch eine präzise Justage erreicht.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung einer optoelektronischen Vorrichtung mit einem Lichtempfänger und einer verkippbaren adaptiven Linse in der Empfangsoptik;
- Fig. 2: eine schematische Schnittdarstellung einer optoelektronischen Vorrichtung mit einem Lichtsender und einer verkippbaren adaptiven Linse in der Sendeoptik;
- Fig. 3: eine Darstellung zur Erläuterung einer Kameraanordnung mit mehreren Kameramodulen und der Ausrichtung der Sichtfelder der Kameramodule mit Hilfe von adaptiven Linsen;
- Fig. 4a: eine Darstellung einer adaptiven Linse in einer strahlaufweitenden Einstellung;
- Fig. 4b: eine Darstellung der adaptiven Linse in einer neutralen Einstellung;
- Fig. 4c: eine Darstellung der adaptiven Linse in einer strahlbündelnden Einstellung;
- Fig. 5a: eine Darstellung der adaptiven Linse mit Verkippen nach unten;
- Fig. 5b: eine Darstellung der adaptiven Linse ohne Verkippen;
- Fig. 5c: eine Darstellung der adaptiven Linse mit Verkippen nach oben; und
- Fig. 6: eine Draufsicht auf die adaptive Linse zur Illustration einer segmentierten, nicht rotationssymmetrischen Ansteuerung.

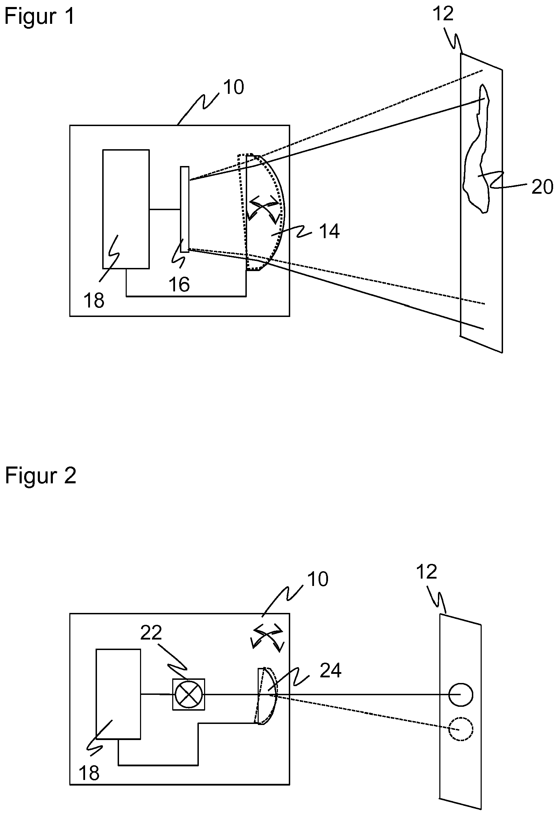

Figur 1 zeigt eine schematische Schnittdarstellung einer Ausführungsform einer optoelektronischen Vorrichtung 10 zur Erfassung von Objektinformationen aus einem Überwachungsbereich 12. Über eine Empfangsoptik 14 erzeugt ein Bildsensor 16, beispielsweise ein CCD- oder CMOS-Chip, Aufnahmen des Überwachungsbereichs 12. Die Bilddaten dieser Aufnahmen werden an eine Auswertungseinheit 18 weitergegeben.

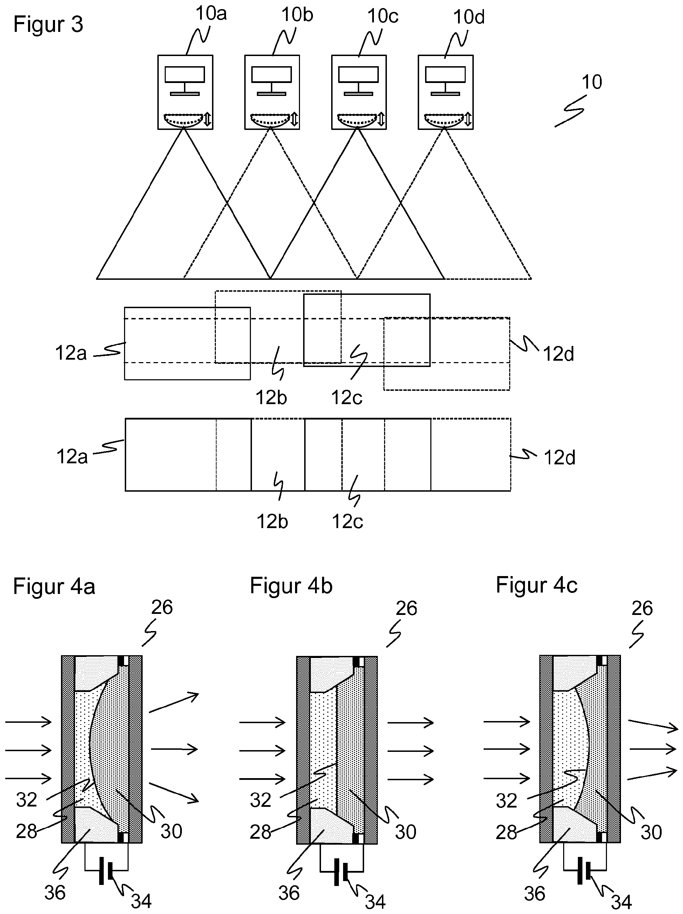

Die Empfangsoptik 14 weist eine adaptive Linse auf, die durch elektronische Ansteuerung der Auswertungseinheit 18 verkippt werden kann. Durch das Verkippen ergibt sich eine Variation des Sichtfeldes der Vorrichtung 10. Das Funktionsprinzip der adaptiven Linse wird weiter unten anhand der Figuren 4 bis 6 näher erläutert. Der Bildsensor 14 und die in Figur 1 vereinfachend durch die adaptive Linse repräsentierte Empfangsoptik 16 bilden eine Baugruppe, die noch weitere nicht gezeigte optische Elemente, wie Linsen, Spiegel, Blenden oder Filter aufweisen kann. Es besteht auch die Möglichkeit, dass die Vorrichtung 10 mehrere adaptive Linsen aufweist.

Das Verkippen der adaptiven Linse der Empfangsoptik 16 wird in einem Einlernprozess zur Justage genutzt. Dabei fungiert die Auswertungseinheit 18 als Justageeinheit, welche die adaptive Linse ansteuert, um deren Kippstellung zu verändern. In dem Einlernprozess können Toleranzen der Bauteile und deren gegenseitiger Anordnung durch externes Monitoring und gezielte Ansteuerung der adaptiven Linse reduziert werden. Dies kann sowohl im Werk bei der Herstellung als auch im Feld für die konkrete Anwendung erfolgen. Die eingelernte Kippstellung sowie die dafür erforderliche Ansteuerung kann als Werkseinstellung in einem Speicherelement abgelegt werden. Damit ist es jederzeit möglich, die Kippstellung der adaptiven Linse zu variieren und anschließend zu den gespeicherten Einstellungen zurückzukehren.

Aufgrund des Bildsensors 16 handelt es sich bei der Ausführungsform gemäß Figur 1 um eine Kamera. Andere Lichtempfänger bilden weitere denkbare optoelektronische Sensoren, etwa Lichtschranken, Lichttaster oder Scanner. Viele derartige Sensoren weisen zusätzlich einen Lichtsender auf, wobei ein eigener Lichtsender auch für eine Kamera als aktive Beleuchtung eingesetzt werden kann. Es ergeben sich damit vielfältige Anwendungen beispielsweise für die Detektion, Inspektion und Vermessung von Objekten. Durch den Einsatz an sich bekannter Signal- oder Bildverarbeitungen zum Lesen von Codes entsteht ein Barcodescanner oder ein kamerabasierter Codeleser.

Durch seine Ortsauflösung ermöglicht der Bildsensor 16 einen einfachen Gerätetausch unter Erhalt der Justierung und vor allem des Sichtfeldes. Dazu speichert die Auswertungseinheit 18 des Originalgeräts, also der ursprünglich eingesetzten Vorrichtung 10, nach Abschluss der Montage oder im laufenden Betrieb mindestens ein konstant vorhandenes und verlässlich identifizierbares Bildmerkmal 20 aus dem Überwachungsbereich 20 sowie dessen Position innerhalb des Sichtfeldes der Vorrichtung 10. Als Bildmerkmal 20 eignet sich insbesondere ein Teil eines Beleuchtungsmusters oder ein Lichtfleck einer eigenen Lichtquelle, besonders dann, wenn kein ausreichender natürlicher Szenenkontrast oder kein wenigstens über eine gewisse Zeitspanne konstanter Szenenbereich zu erwarten ist. Beispielsweise kann in der Vorrichtung 10 eine Zielvorrichtung beziehungsweise ein Ziellaser vorgesehen sein, der zur Visualisierung eines Aufnahme- oder Lesebereichs eingesetzt wird.

Bei der späteren Inbetriebnahme eines Austauschgeräts werden die vom Originalgerät gespeicherten Daten zu dem Bildmerkmal 20 geladen. Das Austauschgerät detektiert Szenenmerkmale und identifiziert das Bildmerkmal 20 über einen Vergleich der Szenenmerkmale mit den geladenen Daten des Originalsensors. Durch Ansteuerung der adaptiven Linse wird eine Verkippung des Sichtfeldes durchgeführt, bis sich das Bildmerkmal 20 auch für das Austauschgerät an der vorgesehenen Stelle und damit dessen Sichtfeld an derselben Position befindet wie bei dem Originalgerät. Somit erfolgt ein Gerätetausch unkompliziert und unter Erhalt der Funktion, ohne dass der Benutzer Ausrichtungsschritte vornehmen muss, und es ist auch kein Zuschneiden des Sichtfeldes erforderlich, wodurch das effektiv verfügbare Sichtfeld verringert würde.

Figur 2 zeigt eine weitere Ausführungsform der optoelektronischen Vorrichtung 10. Diese Ausführungsform unterscheidet sich von der in Figur 1 gezeigten Ausführungsform dadurch, dass hier anstelle eines Lichtempfängers oder Bildsensors 16 ein Lichtsender 22 und dementsprechend eine adaptive Linse als Teil einer Sendeoptik 24 statt der Empfangsoptik 14 vorgesehen ist. Die zu Figur 1 beschriebene Justage zum Ausgleich von Teile-, Fertigungs- und Montagetoleranzen ist hier genauso möglich. Ohne eigene Darstellung seien nochmals Mischformen erwähnt, in denen sowohl ein Lichtsender als auch ein Lichtempfänger vorgesehen sind, wobei mindestens im Sendepfad oder im Empfangspfad eine adaptive Linse vorgesehen ist.

Figur 3 zeigt ein weiteres Beispiel einer Ausrichtung durch Verkippen von adaptiven Linsen. Die optoelektronische Vorrichtung 10 weist hier eine Vielzahl von Kameramodulen 10a-d auf, deren Überwachungsbereiche oder Sichtfelder 12a-d sich zu einem größeren Gesamtsichtfeld ergänzen und die beispielsweise jeweils so aufgebaut sind wie die Vorrichtung 10 gemäß Figur 1. Allerdings muss nicht jedes Kameramodul 10a-d eine eigene Auswertungseinheit 18 besitzen, die stattdessen übergeordnet beziehungsweise nahezu beliebig verteilt implementiert werden kann. Die Kameramodule 10a-d sind untereinander oder mittels einer übergeordneten Steuerung verbunden und können so miteinander kommunizieren.

Für den Betrieb sollen die parallel angeordneten Kameramodule 10a-d zueinander ausgerichtet werden. Unberührt davon bleibt eine mögliche Justage der Kameramodule 10a-d in sich, wie sie zuvor beschrieben wurde.

Aufgrund von Fertigungs- und Befestigungstoleranzen sind die Sichtfelder 12a-d anfänglich nicht exakt zueinander ausgerichtet. Dies ist in der Mitte von Figur 3 dargestellt. Die herkömmliche Lösung würde vorsehen, das gemeinsame Sichtfeld durch Softwarezuschnitt auf einen durch die gestrichelten Linien illustrierten zentralen Bereich zu beschränken. Dadurch geht aber ein Teil des möglichen Sichtfeldes verloren.

Um die Sichtfelder 12a-d aufeinander anzupassen, werden Szenen- oder Bildmerkmale in Überlappungsbereichen der Sichtfelder 12a-d vorzugsweise im maximalen Fokusabstand identifiziert und verglichen. So kann die Ausrichtung durch Verkippen der adaptiven Linsen der Kameramodule 12a-d korrigiert werden, und es ergibt sich die in Figur 3 unten gezeigte optimale Ausrichtung mit maximaler Größe des Gesamtsichtfeldes.

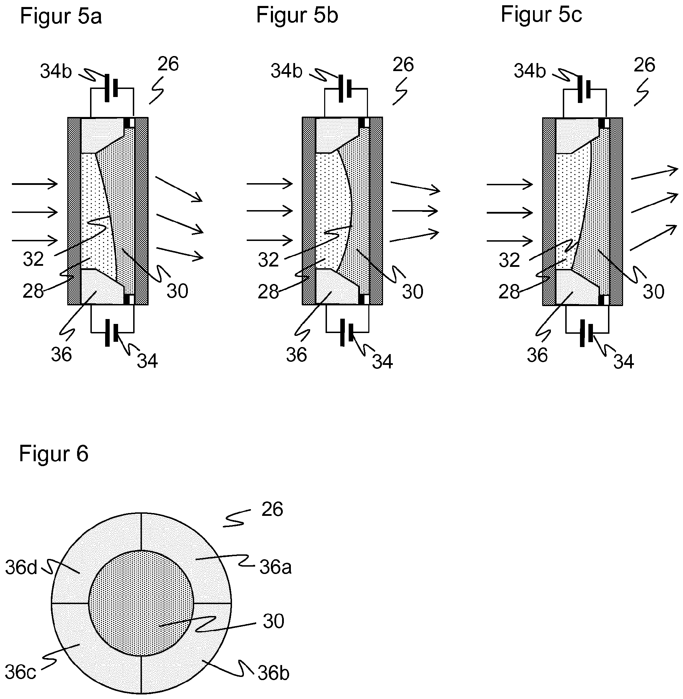

Die Figuren 4 und 5 zeigen die adaptive Linse der Empfangsoptik 14 beziehungsweise der Sendeoptik 22 in einer beispielhaften Ausführungsform als Flüssiglinse 26 nach dem Elektrobenetzungseffekt. Die Funktionsweise wird anhand dieser Flüssiglinse 26 erläutert, aber die Erfindung umfasst auch andere adaptive Linsen, beispielsweise solche mit einer Flüssigkeitskammer und einer diese bedeckenden Membran, deren Wölbung durch Druck auf die Flüssigkeit verändert wird, oder Linsen mit einem gelartigen optisch durchlässigen Material, dass durch eine Aktorik mechanisch verformt wird.

Die aktiv durchstimmbare Flüssiglinse 26 weist zwei transparente, nicht mischbare Flüssigkeiten 28, 30 mit unterschiedlichen Brechungsindizes und gleicher Dichte auf. Die Form der Flüssigkeits-Flüssigkeitsgrenzschicht 32 zwischen den beiden Flüssigkeiten 28, 30 wird zur optischen Funktion verwendet. Die Aktuierung basiert auf dem Prinzip der Elektrobenetzung, welche eine Abhängigkeit der Oberflächen- oder Grenzflächenspannung vom angelegten elektrischen Feld zeigt. Deshalb ist es möglich, die Form der Grenzschicht 32 und damit die optischen Eigenschaften der Flüssiglinse 26 durch elektrische Ansteuerung an einem Anschluss 34 zu verändern, wodurch entsprechende Spannungen an einer Elektrode 36 anliegen.

Figur 4 zeigt zunächst die länger bekannte Veränderung der Fokuseigenschaften der Flüssiglinse 26. In Figur 4a wird einfallendes Licht an einer konkaven Grenzschicht 32 aufgestreut. Figur 4b zeigt eine neutrale Einstellung mit flacher Grenzschicht 32, während in Figur 4c die Grenzschicht konvex ist und damit das einfallende Licht bündelt. Es ist klar, dass durch entsprechende Zwischeneinstellungen das Brechungsverhalten feiner abgestuft und beispielsweise eine Brennweite eingestellt werden kann.

Die Flüssiglinse 26 kann aber auch in ihrer Verkippung beeinflusst werden. Dies wird in Figur 5 illustriert und beruht auf nicht rotationssymmetrisch angelegten Spannungen und damit elektrischen Feldern. Dementsprechend wird die Grenzschicht 32 nicht rotationssymmetrisch verformt, was für die Verkippung ausgenutzt wird. Figur 5a zeigt eine Verkippung der Flüssiglinse 26 nach unten, Figur 5b eine rotationssymmetrische Einstellung ohne Verkippung zum Vergleich, und Figur 5c eine Verkippung der Flüssiglinse 26 nach oben. Dabei bezieht sich die Richtung der Verkippung jeweils auf die optische Wirkung, also aus welcher Richtung Licht empfangen wird beziehungsweise in welche Richtung Sendelicht ausgesandt wird. Der Verkippung kann jeweils eine Fokussierung überlagert sein.

Figur 6 zeigt eine Draufsicht auf die Flüssiglinse 26, um nochmals die nicht rotationssymmetrische Ansteuerung zu erläutern. Dazu wird nämlich die Elektrode 36 segmentiert. Zur Ansteuerung der hier beispielhaft vier Segmente 36a-d kann mindestens ein in Figur 5 gezeigter zusätzlicher Anschluss 34b erforderlich werden. Durch Anlegen unterschiedlicher Spannungen an die Segmente 36a-d wird die Grenzschicht 32 in einer nicht rotationssymmetrischen Weise verformt, und deshalb kann neben der Brennweite auch eine Verkippung der Linsenform eingestellt werden.

## Patentansprüche

1. Optoelektronische Vorrichtung (10) mit einem Lichtempfänger (16), einer dem Lichtempfänger (16) vorgeordneten Optik (24, 14), die eine adaptive Linse (26) mit variabler Verkippung aufweist, und mit einer Justageeinheit (18), die dafür ausgebildet ist, die adaptive Linse (26) derart zu verkippen, dass Fertigungstoleranzen und/oder Montagetoleranzen ausgeglichen werden, wobei die Vorrichtung (10) als Kamera mit einem Bildsensor (16) als Lichtempfänger ausgebildet ist,
**dadurch gekennzeichnet,**
**dass** für einen einfachen Gerätetausch die Justageeinheit (18) dafür ausgebildet ist, in einer Aufnahme des Bildsensors (16) mindestens ein Bildmerkmal (20) zu identifizieren und samt Position zu speichern
sowie mindestens ein Bildmerkmal (20) und eine Position des Bildmerkmals (20) einzulesen und die adaptive Linse (26) so zu verkippen, dass sich das eingelesene Bildmerkmal (20) in einer Aufnahme des Bildsensors (16) an der eingelesenen Position befindet,
so dass eine als Originalgerät eingesetzte Vorrichtung (10) nach Abschluss einer Montage oder im laufenden Betrieb ein Bildmerkmal samt Position speichert und eine als Austauschgerät eingesetzte Vorrichtung (10) bei der späteren Inbetriebnahme die vom Originalgerät gespeicherten Daten zu dem Bildmerkmal lädt, Szenenmerkmale detektiert und das Bildmerkmal über einen Vergleich der Szenenmerkmale mit den geladenen Daten des Originalsensors identifiziert und durch Ansteuerung der adaptiven Linse (26) eine Verkippung des Sichtfeldes durchgeführt wird, bis sich das Bildmerkmal auch für das Austauschgerät an der vorgesehenen Stelle befindet wie bei dem Originalgerät und somit das Austauschgerät anhand des mindestens einen Bildmerkmals automatisch den identischen Sichtbereich einstellt wie das Originalgerät.

2. Vorrichtung (10) nach Anspruch 1,
wobei die Justageeinheit (18) ein Speicherelement aufweist, um eine im Fertigungsprozess eingelernte Kippstellung der adaptiven Linse (26) als justierte Werkseinstellung zu speichern.

3. Verfahren zum Justieren einer als Kamera ausgebildeten optoelektronischen Vorrichtung (10), die einen Bildsensor (16) aufweist, wobei dem Bildsensor (16) eine Optik (24, 14) vorgeordnet ist, die eine adaptive Linse (26) mit variabler Verkippung aufweist, wobei die adaptive Linse (26) derart verkippt wird, dass Fertigungstoleranzen und/oder Montagetoleranzen ausgeglichen werden,
**dadurch gekennzeichnet,**
**dass** für einen einfachen Gerätetausch eine als Originalgerät eingesetzte Vorrichtung (10) nach Abschluss einer Montage oder im laufenden Betrieb in einer Aufnahme des Bildsensors (16) des Originalgeräts mindestens ein Bildmerkmal (20) identifiziert und samt Position speichert und zu einem späteren Zeitpunkt eine als Austauschgerät eingesetzte Vorrichtung (10) das vom Originalgerät gespeicherte Bildmerkmal (20) samt Position des Bildmerkmals (20) einliest, Szenenmerkmale detektiert und das Bildmerkmal über einen Vergleich der Szenenmerkmale mit den geladenen Daten des Originalsensors identifiziert und die adaptive Linse (26) so verkippt, dass sich das Bildmerkmal (20) in einer Aufnahme des Bildsensors (16) des Austauschgeräts an der Position und damit auch für das Austauschgerät an der vorgesehenen Stelle befindet wie bei dem Originalgerät und somit das Austauschgerät anhand des mindestens einen Bildmerkmals automatisch den identischen Sichtbereich einstellt wie das Originalgerät.

## Claims

1. An optoelectronic apparatus (10) comprising a light receiver (16) and optics (24, 14) arranged in front of the light receiver (16) and having an adaptive lens (26) with variable tilt, the apparatus (10) further comprising an alignment unit (18) which is configured to tilt the adaptive lens (26) in such a way that manufacturing tolerances and/or assembly tolerances are compensated, wherein the apparatus (10) is configured as a camera with an image sensor (16) as the light receiver,
**characterized in that**, for a simple device exchange, the alignment unit (18) is configured to identify at least one image feature (20) in an image taken by the image sensor (16) and to store it including its position,
as well as to read in at least one image feature (20) and a position of the image feature (20) and to tilt the adaptive lens (26) in such a way that in an image taken by the image sensor (16) the image feature (20) read in is located at the position read in,
so that an apparatus (10) used as an original device stores an image feature including its position after completion of the installation or during operation, and an apparatus (10) used as an exchange device, at a later taking into operation, loads the data regarding the image feature stored by the original device, detects features of the scenery and identifies the image feature by a comparison of the features of the scenery with the loaded data of the original device, and by control of the adaptive lens (26) the field of view is tilted until the image feature is at the destined position for the exchange device like with the original device, and thus the exchange device automatically sets the same field of view as the original device based on the image feature.

2. The optoelectronic apparatus in accordance with claim 1,
wherein the alignment unit (18) has a storage element in order to store tilt positions of the adaptive lens (26) as aligned work settings, the tilt positions being taught during a manufacturing process.

3. A method for aligning an optoelectronic apparatus (10) configured as a camera comprising an image sensor (16), wherein optics (24, 14) are arranged in front of the image sensor (16) having an adaptive lens (26) with variable tilt, wherein the adaptive lens (26) is tilted in such a way that manufacturing tolerances and/or assembly tolerances are compensated, **characterized in that**, for a simple device exchange, an apparatus (10) used as an original device identifies at least one image feature (20) in an image taken by the image sensor (16) of the original device and stores it including its position after completion of the installation or during operation, and at a later time an apparatus (10) used as an exchange device loads the image feature (20) including the position of the image feature (20) stored by the original device, detects features of the scenery and identifies the image feature by a comparison of the features of the scenery with the loaded data of the original device, and tilts the adaptive lens (26) so that the image feature is at the position and thus at the destined location also for the exchange device like with the original device, and thus the exchange device automatically sets the same field of view as the original device based on the image feature.

## Revendications

1. Dispositif optoélectronique (10) comportant un récepteur de lumière (16), une optique (24, 14) disposée en avant du récepteur de lumière (16) et pourvue d'une lentille adaptative (26) à basculement variable, et comportant une unité d'ajustage (18) réalisée pour basculer la lentille adaptative (26) de manière à compenser des tolérances de fabrication et/ou de montage, le dispositif (10) étant réalisé sous forme de caméra pourvue d'un capteur d'image (16) à titre de récepteur de lumière,
**caractérisé en ce que**
en vue d'un remplacement d'appareil simple, l'unité d'ajustage (18) est conçue pour identifier au moins une caractéristique d'image (20) dans une prise de vue du capteur d'image (16) et pour la mémoriser, y compris sa position, ainsi que pour lire au moins une caractéristique d'image (20) et une position de la caractéristique d'image (20), et pour basculer la lentille adaptative (26) de telle sorte que la caractéristique d'image (20) lue se trouve dans la position lue dans une prise de vue du capteur d'image (16),
de telle sorte qu'un dispositif (10) utilisé en tant qu'appareil d'origine, une fois le montage fini ou bien pendant le fonctionnement en cours, mémorise une caractéristique d'image, y compris sa position, et un dispositif (10) utilisé en tant qu'appareil de remplacement, lors de la mise en service ultérieure, charge les données relatives à la caractéristique d'image et mémorisées par l'appareil d'origine, détecte des caractéristiques de scène et identifie la caractéristique d'image par une comparaison des caractéristiques de scène avec les données chargées du capteur d'origine, puis un basculement du champ de vue est effectué par pilotage de la lentille adaptative jusqu'à ce qu'également pour l'appareil de remplacement, la caractéristique d'image se trouve à l'emplacement prévu, comme dans l'appareil d'origine, et que l'appareil de remplacement règle donc automatiquement la zone de vue identique à celle dans l'appareil d'origine en se basant sur ladite au moins une caractéristique d'image.

2. Dispositif (10) selon la revendication 1,
dans lequel l'unité d'ajustage (18) comprend un élément de mémorisation pour mémoriser une position basculée de la lentille adaptative (26), apprise pendant le processus de fabrication, en tant que position ajustée en usine.

3. Procédé d'ajustage d'un dispositif optoélectronique (10) réalisé sous forme de caméra, qui comprend un capteur d'image (16), une optique (24, 14) étant disposée en avant du capteur d'image (16) et pourvue d'une lentille adaptative (26) à basculement variable, la lentille adaptative (26) étant basculée de manière à compenser des tolérances de fabrication et/ou de montage,
**caractérisé en ce que**
en vue d'un remplacement d'appareil simple, un dispositif (10) utilisé en tant qu'appareil d'origine, une fois le montage fini ou bien pendant le fonctionnement en cours, identifie au moins une caractéristique d'image dans une prise de vue du capteur d'image (16) de l'appareil d'origine et la mémorise, y compris sa position, et à un instant ultérieur un dispositif utilisé en tant qu'appareil de remplacement (10) lit la caractéristique d'image (20), mémorisée par l'appareil d'origine, y compris la position de la caractéristique d'image (20), détecte des caractéristiques de scène et identifie la caractéristique d'image par une comparaison des caractéristiques de scène avec les données chargées du capteur d'origine, et bascule la lentille adaptative (26) de telle sorte que la caractéristique d'image dans une prise de vue du capteur d'image (16) de l'appareil de remplacement se trouve dans la position et donc également pour l'appareil de remplacement à l'emplacement prévu comme dans l'appareil d'origine, et que l'appareil de remplacement règle donc automatiquement la zone de vue identique à celle dans l'appareil d'origine en se basant sur ladite au moins une caractéristique d'image.
